# EUROPEAN PATENT APPLICATION

(11) **EP 4 796 856 A1**
(43) Date of publication of application: **26.08.2026**
(21) Application number: 25194029.2
(22) Date of filing: 05.08.2025
(51) Int. Cl.: F24F 8/90, F24F 11/39

(54) **SOILING INDICATOR MESH AIR HANDLING EQUIPMENT AND METHOD FOR INDICATING INTERNAL SOILING LEVEL OF AN AIR HANDLING EQUIPMENT METHOD FOR ASSESSING MAINTENANCE OR CLEANING NEED OF AN AIR HANDLING EQUIPMENT METHOD FOR INDICATING MALFUNCTION OF AN AIR HANDLING EQUIPMENT OR ITS FILTER, A BLANK FOR MANUFACTURING A FILTER, AND A PARTICLE SPECTRUM INDICATOR**

(30) Priority: 20.02.2025 FI 20255152
(71) Applicant: Plansell Oy, 18100 Heinola (FI)
(72) Inventor: Rännäli, Kari, 18100 Heinola (FI)
(74) Representative: Väisänen, Olli Jaakko

(57) **Abstract**

To facilitate the assessment of internal soiling in air handling equipment, a soiling indicator mesh (1) has been developed - preferably for the air intake or air exhaust of an air handling equipment. The soiling mesh comprises:
i) an air-permeable plastic mesh (2), which, due to its light color, is susceptible to soiling such that the soiling is visually detectable; and
ii) an essentially air-impermeable area (4) formed on the plastic mesh (2),
which is created by coating or laminating the plastic mesh (2) with an essentially colorless transparent material (5), so that the essentially air-impermeable area is not exposed to soiling caused by the airflow passing through it.

The application includes parallel patent claims directed to an air handling equipment and methods for indicating the internal soiling level of an air handling equipment, for assessing its need for maintenance or cleaning, and for indicating malfunction of the equipment or its filter. Claims are also directed to a blank for manufacturing the filter, and to a particle spectrum indicator.

## Description

### Technical Field

The invention relates to air handling equipment (such as heat pumps, dust extractors, room fans, and air handling units) and more broadly to equipment for ventilation, air purification, and air transfer, and to technical equipment and methods concerning their soiling, maintenance, or cleaning. From one perspective, the invention also relates to a particle spectrum indicator suitable for visualizing the particle size distribution of airborne contaminants.

### Background

Air handling equipment-such as air source heat pumps, room fans, or ventilation units-typically use a simple mesh to prevent larger particles, and for example, long hairs from entering the air handling equipment.

These machines draw air from the surrounding environment-e.g., from outdoors, industrial spaces, production facilities (such as factories or workshops), or indoor air. This air is not always clean and often contains varying amounts of dirt. Therefore, the ductwork of air handling equipment should be cleaned. However, the need for cleaning is often difficult to assess, which leads to users either neglecting the cleaning altogether or cleaning preemptively even when it might not yet be necessary, increasing costs.

Similarly, air handling equipment that extracts dirt from air flowing through them-such as chip extractors used in rooms or workshops that may circulate air into room air, or ventilation units-can malfunction internally, for example due to a damaged seal or a broken filter. Such malfunctions can be hard to detect, especially because the dust or dirt often consists of fine particles (microscopic dust), which are often invisible to the naked eye.

### Object of the Invention

The first object of the invention is to simplify the assessment of the internal soiling level of air-handling equipment and to improve the accuracy of evaluating the need for maintenance or cleaning of such machines, as well as to simplify the detection of potential malfunctions. These objectives can be achieved by means of the soiling mesh according to claim 1, the air-handling equipment according to claim 8, and the method according to claim 11 or 12.

The second object of the invention is to enable improved monitoring of air quality or more accurate assessment of the soiling of the air-handling equipment. This objective can be achieved by means of the particle spectrum indicator according to independent claim 16.

The third object of the invention is to enable timely maintenance and cleaning of air-handling equipment. This objective can be achieved by means of the method according to independent claim 17 for assessing the need for maintenance or cleaning of the air-handling equipment.

The dependent claims describe advantageous embodiments of the soiling mesh and the air-handling equipment.

### Advantages of the Invention

The soiling mesh according to the invention comprises i) an air-permeable plastic mesh, which due to its light color is susceptible to soiling in such a way that the soiling is visually detectable, and ii) a substantially air-impermeable area implemented in the plastic mesh, formed by coating or covering the plastic mesh with a transparent material in such a way that the substantially air-impermeable area is not subject to soiling caused by the airflow passing through it.

"Substantially air-impermeable area" here means that the flow resistance for air at that region is made significantly higher than that of the air-permeable area. For example, under normal operation of the air-handling equipment, more than 90%, preferably more than 95%, and most preferably more than 99% of the airflow per unit area of the mesh flows through the air-permeable area, while less than 10%, preferably less than 5%, and most preferably less than 1% flows through the substantially air-impermeable area. Thus, if the substantially air-impermeable area and the air-permeable area are of equal size, only less than 1:10, preferably less than 1:20, and most preferably less than 1:100 of the airflow compared to that passing through the permeable area would pass through the impermeable part.

According to the invention, the substantially air-impermeable area is formed by coating or covering the plastic mesh with a substantially colorless, transparent material.

This allows the air-permeable area becoming soiled more and especially significantly faster than the substantially air-impermeable area. The difference in air permeability creates a difference in soiling - the substantially impermeable area remains cleaner or unsoiled - and based on this visual difference, the user can detect the internal soiling level of the air-handling equipment. This is based on the observation that the soiling rate of the mesh is equal or directly proportional with the internal soiling level of the machine.

The transparent material is substantially colorless and may consist of or include transparent tape or transparent adhesive, for example. These implementations allow for ease of manufacturing, achieving under normal operation conditions of an air machine airflow resistance in the impermeable area to below 1% per unit area (relative to the airflow that would pass through the permeable area). Furthermore, the colorless material, such as transparent tape or adhesive allows visibility of the mesh, making visual inspection of soiling straightforward.

Preferably, the air-permeable and substantially impermeable areas are located side by side, which facilitates visual comparison.

Preferably, the plastic mesh is installed or attached to a mounting frame, simplifying construction and potentially also reducing costs of the soiling indicator mesh.

Preferably, both the permeable and impermeable areas are made from the same plastic mesh, where the impermeable area is realized by coating or covering it on a selected portion at which it is desired to create the substantially air impermeable area. This allows the manufacturing of the soiling indicator mesh to be carried out as simply as possible.

The mesh (possibly excluding the coating of the substantially air impermeable area) may be formed as a single piece with the mounting frame. In this case, the permeable area is preferably perforated.

The perforation can be advantageously made using a laser. Alternatively or additionally, the plastic mesh may include material that melts into perforations upon localized heating. In this case, the perforation can advantageously be implemented by locally heating, e.g. by laser.

Preferably, the plastic mesh comprises a range of gradually increasing hole sizes **in** the permeable area to visually make visible the sizedependent soiling effect of airborne particles. Based on this visual spectrum, internal soiling of the air-handling equipment can be assessed. The comparison is facilitated if the impermeable area covers part of the gradually increasing size holes, thus enabling the mesh to serve as a kind of "Particle Spectrum Indicator" for monitoring air quality, machine soiling, and filter performance.

An air handling equipment according to the invention comprises at least one soiling indicator mesh according to the invention, positioned at the outer end of an air intake duct and/or air exhaust duct, **in** such a way that visual inspection of the mesh's soiling is possible. If the soiling indicator mesh is located at the air intake duct, the internal soiling level of such an air handling equipment (such as an air-source heat pump, room fan, ventilation unit, or a fan or ventilation system used in industrial premises, healthcare facilities (such as hospitals), public spaces (such as shopping centers, offices, or civil defense shelters), or production facilities) can be monitored by visually comparing the degree of soiling between the air-permeable area and the substantially air-impermeable area of the intake filter. If the soiling indicator mesh is located at the air exhaust duct, it should preferably be placed in the room, at or near the supply air vent. In such a case, by visually comparing the degree of soiling between the air-permeable area and the substantially air-impermeable area, it is possible to detect a malfunction in the air handling equipment or its filter, such as a filter rupture or a detached gasket.

In the method according to the invention for indicating internal soiling of an air handling equipment, a soiling indicator mesh according to the invention is used, placed visibly at the outer end of the air intake duct, such that visual inspection of the mesh is possible in the air intake duct of the air handling equipment according to the invention. Internal soiling of the air handling equipment can then be determined by comparing the color change caused by soiling of the plastic mesh to the color of a substantially air-impermeable area.

In the method according to the invention for indicating malfunction of an air handling equipment, a soiling indicator mesh according to the invention is used, placed visibly at the outer end of the air exhaust duct, such that visual inspection of the mesh is possible in the air exhaust duct of the air handling equipment according to the invention. Malfunction of the air handling equipment or its filter can then be detected by comparing the color change caused by soiling of the plastic mesh to the color of a substantially air-impermeable area. This allows, for example, easier visual detection of damage to an intermediate filter in a chip or workshop vacuum operating on room air circulation.

A blank according to the invention for manufacturing a soiling indicator mesh - which is preferably a soiling indicator mesh for air intake or air exhaust of an air handling equipment - comprises a mounting frame that includes pre-formed folding lines such as creases, along which the mounting frame can be folded into a shape suitable for the air intake duct and/or air exhaust duct of the air handling equipment. Additionally, the blank may comprise a plastic mesh that is attached or attachable to the blank, for example using tape or adhesive, or a plastic mesh integrally formed with the blank material, which, due to its light color, is prone to soiling such that the soiling is visually detectable. Furthermore, the plastic mesh comprises a substantially air-impermeable area or element - for example, tape or adhesive - for forming a substantially air-impermeable area on the plastic mesh.

The blank enables "flat packing," meaning that the components required for the soiling indicator mesh according to the invention can be delivered in a space-saving form, occupying less space than the volume of the fully assembled soiling indicator mesh with its mounting frame. On the other hand, it may also allow for savings in assembly costs, especially if, for example, a product sold to consumers is only assembled by the consumer themselves.

The particle spectrum indicator is a mechanical and visual indicator device that illustrates the accumulation of airborne particles of different sizes using a plastic mesh surface with perforations of various sizes. Due to its light color, the mesh is prone to soiling in a way that makes the soiling visually detectable.

The purpose of the particle spectrum indicator is to provide a rough yet visually observable representation of the particle size distribution in the air, for example, on the scale defined by the ISO 16890 standard from PM1 to ISO Coarse. Preferably, the indicator features a horizontally increasing hole size and substantially air-impermeable comparison surfaces (such as areas sealed with tape or glue), which give the indicator a visually clear dimensional reference. Operating principle: Air flows through the indicator mesh. The mesh is divided into zones, for example 1-2 cm wide, with each zone containing a mesh element or perforated area of a different hole size (e.g., from 0.1 mm to 2 mm). Particles adhere at different locations depending on when they encounter a sufficiently "unobstructed" hole. Result: Fine particles soil the entire mesh (visible only as a subtle darkening). Larger particles become visible only in zones with corresponding or larger hole sizes-visual contrast emerges as the observation period progresses. The mesh does not function as a conventional filter but as an adhesion surface-its holes do not need to block the particles; rather, their function is to adsorb dirt, thereby making the particle spectrum of the airborne dirt visible.

In the method for assessing the need for maintenance or cleaning of an air handling equipment, a maintenance or cleaning action is carried out when one or more of the following conditions are met:
- the soiling mesh according to the invention indicates that the air-permeable plastic mesh has become sufficiently soiled in comparison to the substantially air-impermeable area formed in the mesh;
- the soiling mesh of the air handling equipment according to the invention indicates that the air-permeable plastic mesh has become sufficiently soiled in comparison to the substantially air-impermeable area formed in the mesh;
- the particle spectrum indicator according to the invention indicates that the mesh is sufficiently soiled in the areas corresponding to the hole sizes relevant for determining the maintenance or cleaning need of the air handling equipment;
- in the method according to the invention for indicating the internal soiling level of an air handling equipment, internal soiling of the air handling equipment is observed;
- in the method according to the invention for indicating malfunction of the air handling equipment or its filter, malfunction of the air handling equipment or its filter is observed.

### List of Drawings

The invention is described in more detail below with reference to exemplary embodiments illustrated in the drawings.
FIG 1 shows a clean soiling mesh, and FIG 2 shows a soiling mesh after some use, where the plastic mesh has become soiled. FIG 3 shows a blank for the possible manufacture of a soiling mesh.
FIG 4 shows a plastic mesh with a gradually increasing hole size. This can be used as a particle spectrum indicator or as the plastic mesh of a soiling mesh.

### Detailed description

### Part I: Soiling Mesh

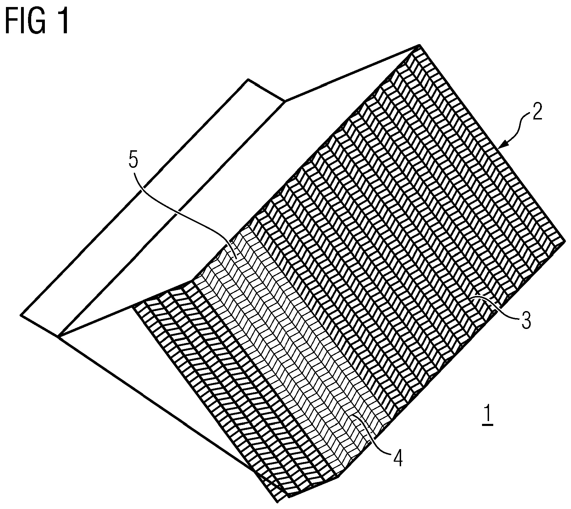

FIG. 1 shows a soiling indicator mesh 1, which comprises a plastic mesh 2. The plastic mesh 2 comprises an air-permeable area 3 and a substantially air-impermeable area 4. The substantially air-impermeable area is implemented by covering or coating the plastic mesh 2 with a transparent material 5.

The transparent material 5 may be essentially colorless. The transparent material 5 may be or may comprise transparent tape or adhesive.

The air-permeable area 3 and the substantially air-impermeable area 4 are preferably located side by side.

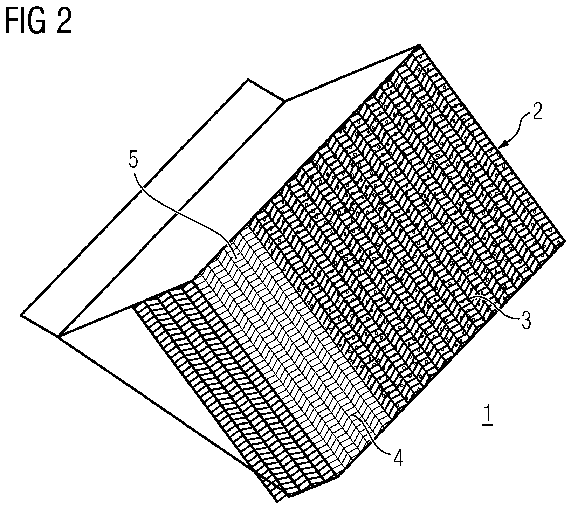

FIG 2 shows the soiling indicator mesh 1 after having been used for some time, where the air-permeable part 3' has become soiled. The substantially air-impermeable part 4 remains unsoiled or has become soiled only insignificantly.

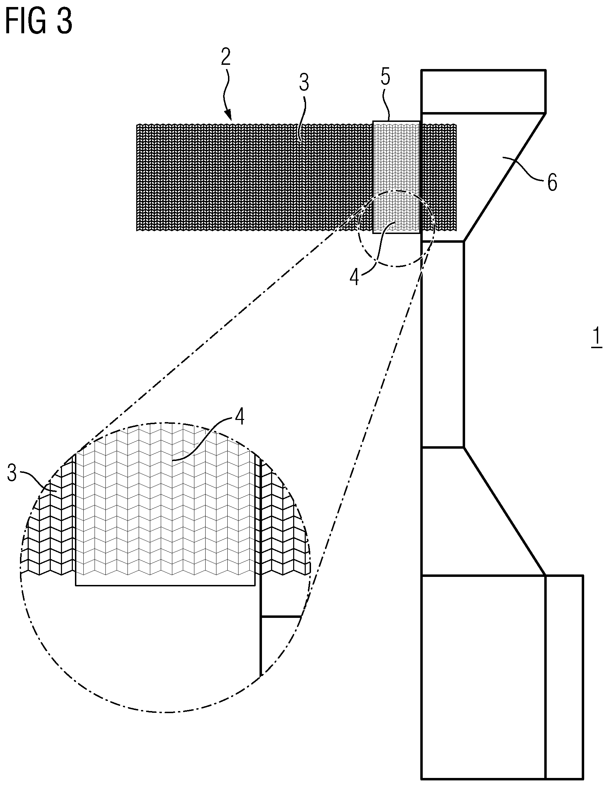

FIG 3 shows one possible blank for manufacturing the soiling indicator mesh 1. The plastic mesh 2 is mounted or attached to a mounting frame 6. The mounting frame 6 may be made of the same or a different material than the mesh part 2. The mounting frame may also be made of cardboard, carton, or plastic, or comprise any of these materials.

The zoomed-in detail illustrates an embodiment in which the plastic mesh (air-permeable area 3) and the substantially air-impermeable area 4 of the soiling indicator mesh 1 are made using the same plastic mesh. The substantially air-impermeable area 4 is formed by coating or covering the plastic mesh with a transparent material 5, such as in particular transparent tape applied on both sides. Instead of transparent tape, a drying adhesive may also be used, in which the adhesive surface dries quickly enough after manufacturing so that it does not remain tacky in a way that would attract dust and dirt.

The mounting frame 6 shown in FIG 3 indicates, with lines, the fold lines (i.e., scores made in the mounting frame), by folding along which the soiling indicator mesh 1 can be folded into a shape such as that shown in FIG 1. The shape is preferably an open-bottomed box with the plastic mesh 2 located on the top side. After folding, the mounting frame can be stapled, glued, or otherwise fastened in a stable form so that the fold does not open.

The plastic mesh 2 can be attached separately to the mounting frame 6, or it can be integrally included in the mounting frame 6-especially advantageously if the mounting frame 6 is made of the same material as the plastic mesh 2. In such a case, it is particularly advantageous to manufacture the plastic mesh 2 by perforating a portion of the mounting frame, for example, using a laser.

An air machine according to the invention comprises the soiling mesh 1 positioned at the outer end of the air inlet and/or air outlet duct, such that visual inspection of the mesh is possible. The optional mounting frame 6 may be shaped to conform to the shape of the air machine's air inlet and/or air outlet duct.

The air machine is preferably a heat pump, room fan, or ventilation unit.

In the method for indicating internal soiling of an air handling equipment, a soiling indicator mesh 1 is used, positioned visibly at the inlet connection located at the outer end of the air handling equipment's intake duct, such that visual inspection of the soiling indicator mesh is possible. Internal soiling of the air handling equipment can be determined by comparing the color change caused by soiling in the air-permeable area 3 to the color of the substantially air-impermeable area 4.

In the method for indicating malfunction of an air handling equipment, the soiling indicator mesh 1 is used in the air outlet duct of the air handling equipment. In this case, a malfunction of the air handling equipment or its filter can be identified by comparing the color change caused by soiling of the plastic mesh (air-permeable area 3) to the color of the substantially air-impermeable area 4.

The assembly shown in FIG 3 can be understood to represent a blank for manufacturing the soiling indicator mesh 1 (which is preferably an air intake or exhaust filter). For this purpose, the mounting frame 6 comprises prefabricated fold lines such as score marks, enabling the frame to be folded into a shape suitable for the air inlet and/or outlet duct of an air machine.

The blank may also include a plastic mesh 2 attached or attachable to the frame by taping or gluing, or integrally formed with the blank from the same material.

For simplified manufacturing, the plastic mesh 2 may be delivered separately from the mounting frame 6. It is sufficient for the user or service technician to attach the plastic mesh 2 to the mounting frame 6 by taping or by another suitable method.

The plastic mesh 2 belonging to the blank (possibly delivered separately from the mounting frame 6) preferably comprises an air-permeable region 3 and a substantially air-impermeable region 4 implemented as described above. Alternatively, the blank may include means, such as tape or glue, for forming the substantially air-impermeable region 4.

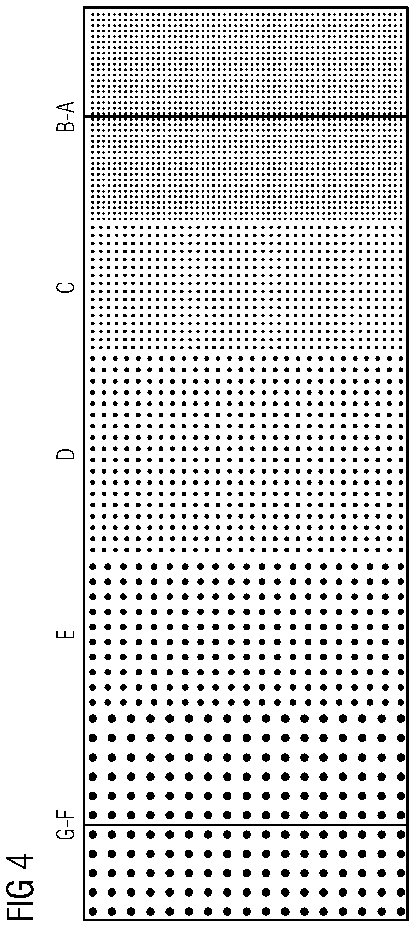

FIG 4 shows a plastic mesh with gradually increasing hole size. This can be used as a particle spectrum indicator or as the plastic mesh 2 of the soiling indicator mesh 1.

### Part II: Particle Spectrum Indicator

The particle spectrum indicator is a mechanical and visual indicator device that visualizes the accumulation of airborne particles of different sizes using a based on a plastic mesh surface with perforations of different sizes which, due to its light color, the mesh is prone to soiling in a way that the soiling is visually detectable.

The purpose of the particle spectrum indicator is to provide a rough but visually observable depiction of the particle size distribution in the air, for example on the scale defined by ISO 16890 from PM1 to ISO Coarse. Preferably, the indicator features a horizontally increasing hole size and substantially air-impermeable comparison surfaces (e.g. covered or taped over areas), providing the indicator with a visually clear dimensional reference.

Operating Principle: Air flows through the indicator mesh. The indicator mesh is divided into zones, for example 1-2 cm wide, and each zone features a mesh element or perforated area with a different hole size (e.g., from 0.1 mm to 2 mm). Particles adhere in different zones depending on when they encounter a "sufficiently not passagepreventing" hole. The result: fine particles soil the entire mesh (visible only as subtle darkening), while larger particles become visible only in zones with corresponding or larger hole sizes-visual contrast emerges over the observation period. The mesh does not function as a traditional filter but as a particle adhesion surfacethe holes do not need to block particles; instead, they adsorb dirt, making the particle spectrum of airborne dirt visible.

### Example: Particle Spectrum Indicator PM1 - ISO COARSE

### Structure:

Total width: for example, 8-10 cm
Total height: for example, 3-5 cm, depending on any housing and/or frame
Materials: mesh as defined below; any housing or frame may be made of PET or cardboard
Attachment method: Mesh segments are fixed using glue or double-sided tape, or attached to a frame structure

### Zones and Hole Sizes:

| Zone | Width | **Hole size (mm)PM** | **PM class (ISO 16890)** | **Purpose** |
|---|---|---|---|---|
| A | 1 cm | 0.1 mm | **PM1** | Reference surface (sealed with tape) |
| B | 1 cm | 0.1 mm | **PM1** | Soot particles, ultrafine dust |
| C | 1 cm | 0.3 mm | PM2.5 | Fine dust, aerosols |
| D | 1-2 cm | 0.5 mm | PM10 | Street dust, mold spores |
| E | 1-2 cm | 1.0 mm | ISO Coarse | Pollen, coarse particles |
| F | 1 cm | 2.0 mm | ISO Coarse+ | Sand, large ice particles |
| G | 1 cm | 2.0 mm | ISO Coarse+ | Reference surface (sealed with tape) |

### Mesh Material Options:

a) Five separate plastic mesh segments of different sizes joined together:
   - Nylon or polyester micro-mesh, or extruded polypropylene or HDPE mesh
   - Clear PET film or transparent tape for covering reference surfaces
b) Woven plastic mesh:
   - Manufactured like fabric from polyethylene or polypropylene yarn forming a grid
   - Clear PET film or transparent tape for reference surfaces c) Extruded plastic netting:
   - Not woven, but produced via molding or extrusion process
   - Clear PET film or transparent tape for reference surfaces

Options a), b), and c) are also suitable for implementing the plastic mesh 2 of the soiling mesh 1.

For all embodiments, it is essential that the mesh is light-colored, making it prone to visible soiling.

### Airflow Direction:

Air must flow evenly through all adhesion surfaces of the particle spectrum indicator. The indicator may be lightly enclosed to ensure even air distribution across the full width. It may also be positioned in the airflow without any housing.

Intended Use (same as for soiling mesh):
Monitoring air filters in residential ventilation or heat pump systems Visual indicator of maintenance or cleaning need

## Claims

1. A soiling indicator mesh (1), preferably for the air intake or air exhaust of an air handling equipment, **comprising:**
i) an air-permeable plastic mesh (2), which, due to its light color, is prone to soiling in a way that the soiling is visually observable; and
ii) a substantially air-impermeable area (4) implemented on the plastic mesh (2),
which is formed by coating or covering the plastic mesh (2) with a substantially colorless transparent material (5) such that the substantially air-impermeable area is not subject to soiling caused by airflow passing through.

2. The soiling indicator mesh (1) according to claim 1, **wherein:** the transparent material (5) is or comprises transparent tape.

3. The soiling indicator mesh (1) according to any of claims 1-2, **wherein:** the plastic mesh (2) is mounted or attached to a mounting frame (6).

4. The soiling indicator mesh (1) according to any of the preceding claims, **wherein:** the soiling indicator mesh (1), except for the transparent material (5), is integrally formed with the mounting frame (6), and the air-permeable region (3) of the plastic mesh (2) is perforated.

5. The soiling indicator mesh (1) according to claim 4, **wherein:** the perforation is made by laser.

6. The soiling indicator mesh (1) according to claim 4 or 5, **wherein:** the plastic mesh (2) is or comprises a material that melts to form holes when locally heated, and wherein the perforation of the air-permeable part (3) is made by locally heating the material, for example by laser.

7. The soiling indicator mesh (1) according to any of the preceding claims 1-6, wherein the plastic mesh (2) comprises a range of holes that gradually increase in size in the air-permeable area (3) to visualize the size-dependence of the soiling effect of airborne impurities encountered by the soiling indicator mesh (1), and wherein preferably the substantially air-impermeable area (4) also covers holes that gradually increase in size.

8. An air handling equipment **comprising:** a soiling indicator mesh (1) according to any of the preceding claims 1-7, arranged at one outer end of the air intake duct and/or one outer end of the air exhaust duct so that visual inspection of soiling of the soiling indicator mesh (1) is possible.

9. The air handling equipment according to claim 8, **wherein:** the soiling mesh (1) is according to claim 3 or any of claims 4-7 depending on claim 3, and wherein the mounting frame (6) is correspondingly shaped to fit one shape of the air intake duct and/or one shape of the air exhaust duct of the air-handling equipment.

10. The air handling equipment according to claim 8 or 9, **wherein:** the air-handling equipment is: a heat pump, room fan, ventilation unit, or a fan or ventilation unit used in industrial premises, healthcare facilities, public spaces, or production facilities, or a dust extractor.

11. A method for indicating internal soiling of an air-handling equipment, **wherein in the method:** a soiling indicator mesh (1) according to any of claims 1-7 is used, arranged visibly an air intake connection at the outer end of an air intake duct, such that visual inspection of the soiling indicator mesh (1) is possible, whereby internal soiling of the air-handling equipment can be determined by comparing the color change caused by the soiling of the air-permeable area (3) with the color of the substantially air-impermeable area (4).

12. A method for indicating failure of an air-handling equipment or its filter, **wherein in the method:** a soiling indicator mesh (1) according to any of claims 1-7 is used, arranged visibly at an air outlet connection at the outer end of an air exhaust duct, such that visual inspection of the soiling indicator mesh is possible, whereby failure of the air-handling equipment or its filter can be determined by comparing the color change caused by soiling of the air-permeable area (3) of the plastic mesh with the color of the substantially air-impermeable area (4).

13. A blank for manufacturing a soiling indicator mesh (1) according to any of claims 1-7, preferably for the air intake or air exhaust of an air-handling equipment, **comprising:** a mounting frame (6), which includes preformed fold lines, such as creases, along which the mounting frame can be folded to conform to a shape of the air intake duct and/or the air exhaust duct of the air-handling equipment.

14. The blank according to claim 13, further **comprising:** a plastic mesh (3) fixed or to be fixed to the blank, for example by taping or gluing, or a plastic mesh (3) integrally formed with the blank, which, due to its light color, is prone to soiling in a way that the soiling is visually observable.

15. The blank according to claim 14, **wherein:** the plastic mesh comprises a substantially air-impermeable area (4) or means-such as tape or adhesive-for forming the substantially air-impermeable area (4).

16. A particle spectrum indicator, **which is:** a mechanical and visual indicator device that illustrates the accumulation of airborne particles of various sizes in perforations of various sizes-e.g., on the scale PM1 to ISO Coarse according to ISO 16890-using a plastic mesh surface that is, due to its light color, prone to soiling in a way that the soiling is visually observable.

17. A method for evaluating the need for maintenance or cleaning of an air-handling equipment, **wherein in the method:** maintenance or cleaning of the air-handling equipment is performed when one or more of the following conditions are met:
- the soiling indicator mesh (1) according to any of claims 1-7 indicates that the air-permeable plastic mesh (3) is sufficiently soiled relative to the substantially air-impermeable area (4) formed in the plastic mesh (2);
- the soiling indicator mesh (1) of the air-handling equipment according to any of claims 8-10 indicates that the air-permeable plastic mesh (3) is sufficiently soiled relative to the substantially air-impermeable area (4) formed in the plastic mesh (2);
- the particle spectrum indicator according to claim 16 indicates that the mesh is sufficiently soiled at the hole sizes relevant to the need for maintenance or cleaning of the air-handling equipment;
- internal soiling of the air-handling equipment is determined in the method according to claim 11;
- failure of the air handling equipment or its filter is determined in the method according to claim 12.
